# EUROPÄISCHE PATENTSCHRIFT

(11) **EP 1 058 019 B1**
(45) Veröffentlichungstag und Bekanntmachung des Hinweises auf die Patenterteilung: **08.01.2003**
(21) Anmeldenummer: 99110762.4
(22) Anmeldetag: 04.06.1999
(51) Int. Cl.: F16D 48/06

(54) **Steuerung für eine fluidbetätigte Kupplung**
Control for a fluid actuated clutch
Commande pour un embrayage actionné par fluide

(43) Veröffentlichungstag der Anmeldung: 06.12.2000
(73) Patentinhaber: Ford Global Technologies, Inc., Dearborn, Michigan 48331 (US)
(72) Erfinder: Lukaszewicz, Thomas, 50737 Köln (DE); Kirchhofer, Johann, 50737 Köln (DE); Geffers, Peter, 52525 Heinsberg (DE); Henning, Manfred, 40667 Meerbusch (DE)
(74) Vertreter: Bonsmann, Manfred, Dipl.-Ing.

(56) Entgegenhaltungen:
- DE-A- 3 918 254
- US-A- 5 002 170
- US-A- 5 527 238

## Beschreibung

Die Erfindung bezieht sich auf ein Verfahren zum automatischen Steuern einer Kupplung, die ein Drehmoment von einem Motor auf ein Getriebe überträgt, nach dem Oberbegriff von Anspruch 1.

Aus der US 5 553 694 ist eine automatische Kupplungssteuerung für Kraftfahrzeuge bekannt, bei der der Kupplungsschlupf auf einen gewünschten Wert einstellbar ist. Der Kupplungsschlupf bestimmt sich aus der Differenz der Motordrehzahl vor der Kupplung und der Getriebeeingangsdrehzahl hinter der Kupplung. Zur Reduzierung der Verzögerung in der Steuerung bzw. in der Regelung wird eine sogenannte Feed-Forward-Strategie angewendet, bei der ein gewisser Anteil der Sollgröße direkt auf die Stellgröße gegeben wird und der restliche Anteil über einen konventionellen Regelkreis läuft. Der hiermit erreichbare Fahrkomfort ist allerdings noch nicht zufriedenstellend, da während der Fahrt, beispielsweise bei einem abrupten Niederdrücken bzw. Loslassen des Gaspedals, Schläge im Antriebsstrang auftreten können.

Aus der DE 39 18 254 A1 ist ein Verfahren zur Verhinderung von Lastwechselschlägen in Folge abrupter Veränderungen der Gaspedalstellung bekannt, bei welchem das Drehmoment von der Kupplung während des Normalfahrbetriebs schlupffrei übertragen wird und bei dem im Falle plötzlicher Laständerungen ein künstlicher Kupplungsschlupf erzeugt wird, welcher anschließend wieder auf Null verringert wird.

Die gattungsgemäße US 5 527 238 beschreibt ein Regelungsverfahren für die Bypass-Kupplung eines Drehmomentwandlers, wobei zur Verbesserung der Schlupfregelung parallel zu einem PID-Regler ein Feed-Forward-Modell eingesetzt wird.

Ein Verfahren zur Regelung des Kupplungsschlupfes zeigt auch die US 5 002 170, ohne dass jedoch hierbei ein Feed-Forward-Modell zum Einsatz käme.

Demgegenüber liegt der vorliegenden Erfindung die Aufgabe zugrunde, den Fahrkomfort zu erhöhen.

Diese Aufgabe wird durch ein Verfahren mit den Merkmalen des Anspruchs 1 gelöst.

Das Verfahren beinhaltet, daß bei einer Kupplung, die das Drehmoment im Normalfahrbetrieb Schlupffrei überträgt, bei plötzlichen Laständerungen ein künstlicher Kupplungsschlupf erzeugt und dieser anschließend allmählich wieder auf Null verringert wird. Hierdurch werden bei sogenannten Tip-Ins, also bei einem abrupten Niederdrücken des Gaspedals bzw. bei einem plötzlichen Loslassen des Gaspedals, Schläge im Antriebsstrang durch das unvermeidliche Spiel in den Antriebsstrangelementen vermieden. Durch den künstlich kurzzeitig erzeugten Schlupf in der Kupplung werden die Schläge im Unterschied zum Stand der Technik weich abgefangen, wodurch diese der Wahrnehmung des Fahrers entzogen werden.

Die plötzlichen Laständerungen werden bevorzugt aufgrund einer schnellen Änderung der Stellung eines Leistungssteuerelements des Motors erkannt.

Zusätzlich kann in einer bevorzugten Ausführungsform der Erfindung ein künstlicher Kupplungsschlupf auch bei sehr niedrigen Fahrzeuggeschwindigkeiten aktiviert werden, beispielsweise beim Ausrollen des Motors, um ein Abwürgen des Motors zu verhindern, ohne daß schon in diesem Stadium ein vollständiges Auskuppeln erforderlich ist.

Im Rahmen der Erfindung wird die Kupplung mit Hilfe eines inversen Feed-Forward-Modells gesteuert, das den mittels eines Stellgliedes auf die Kupplung aufzubringenden Kupplungsdruck in Abhängigkeit von einem gewünschten Kupplungsschlupf bestimmt. Das inverse Feed-Forward-Modell kann dabei wahlweise mit oder ohne Rückkopplungsanteil arbeiten, so daß je nach Betriebsmodus eine reine Steuerung oder eine Schlupf- bzw. Drehzahlregelung möglich sind.

In einer bevorzugten Ausgestaltung der Erfindung wird der Kupplungsdruck über das inverse Feed-Forward-Modell während des schlupffreien Normalfahrbetriebes (d.h. nach dem Anfahrvorgang) auf einen Druck eingestellt, der bei dem Minimaldruck für Schlupffreiheit zuzüglich eines Sicherheitsfaktors liegt. Das Feed-Forward-Modell arbeitet während dieses Normalfahrbetriebes bevorzugt in einem rückkopplungslosen Modus (Open Loop). Der Sicherheitsfaktor wird so knapp bemessen, daß das Auftreten eines Schlupfes im Normalfahrbetrieb noch vermieden wird. Dadurch, daß nicht der volle Kupplungsdruck aufgebracht wird, werden kupplungsinterne Verluste minimiert. Die Kupplung ist weiterhin durch diese Maßnahme das schwächste Glied in der Antriebskette, so daß schwere Schläge von der Straße auf den Antriebsstrang zum Durchrutschen der Kupplung führen, was das Getriebe schützt. Leichtere Schläge, wie sie bei Tip-Ins auftreten, und im Rahmen der Erfindung abgefangen werden sollen, werden bei der im Normalfahrbetrieb vorgesehen Kupplungsstellung noch nicht abgefangen. Jedoch begünstigt der reduzierte Kupplungsdruck eine besonders schnelle Reaktion auf plötzliche Laständerungen im Rahmen der Erfindung, da geringere Druckänderungen verglichen mit einer mit vollem Druck beaufschlagten Kupplung auszuführen sind.

Besonders bevorzugt geht in das Feed-Forward-Modell der Reibungswert der Kupplung ein, und der künstliche Kupplungsschlupf wird durch Erhöhen des Reibungswertes erzeugt. Hierdurch wird eine griffigere Kupplung als vorhanden simuliert, so daß sich in der Realität - da keine Rückkopplungsregelung erfolgt - ein Schlupf ergibt. Der Reibungswert ist zum Erzeugen eines künstlichen Schlupfes, d.h. für das leichte Öffnen der Kupplung, eine besonders geeignete Größe, da auf diese Weise mit geringem Aufwand und sehr kurzen Ansprechzeiten ausgehend von einer vollständig geschlossenen Kupplung ein definierter Schlupf bewirkt werden kann.

Bevorzugt wird nach Erzeugung des künstlichen Kupplungsschlupfes, durch den Schläge im Antriebsstrang abgefangen werden, über das inverse Feed-Forward-Modell eine Rückkopplungsregelung mit dem Schlupfsollwert "0" durchgeführt, bis dieser Sollwert erreicht ist. Dieser Übergang vom rückkopplungslosen in einen Regelmodus mit Rückkopplung kann nach einer vorgegebenen kurzen Zeit oder sofort nach Änderung des Reibungswertes ausgeführt werden. Bevorzugt verbleibt der Reibungswert der Kupplung bis zum Abschluß der Schlupfregelung - wie vorstehend beschrieben - bei seinem künstlich modifizierten Wert und wird erst nach Erreichen der Schlupffreiheit wieder auf den "richtigen" Wert gesetzt, so daß bis zum Erreichen des Schlupfes "0" ein sanfter Übergang in den Normalfahrbetrieb ohne Unstetigkeiten erreicht wird.

Erfindungsgemäß wird die Aufgabe bei einer gattungsgemäßen Kupplungssteuerung dadurch gelöst, daß sie Einrichtungen und Regler zur Durchführung dieser Verfahrensschritte aufweist.

Die Erfindung wird nachfolgend anhand der Zeichnungen beispielshalber noch näher erläutert. Es zeigen:
- Figur 1: in einer schematischen Darstellung eine erfindungsgemäße Kupplungssteuerung,
- Figur 2: ein Blockdiagramm eines inversen Feed-Forward-Modells, das in der Kupplungssteuerung aus Figur 1 eingesetzt wird,
- Figur 3: in einer schematischen Darstellung ein Zustandsschaubild einer erfindungsgemäßen Kupplungssteuerung, und
- Figur 4: ein Schaubild für den Übergang vom Zustand I zum Zustand II in Figur 3 unter Ausbildung einer Blip-Time.

Als Ausführungsbeispiel für das erfindungsgemäße Verfahren und die erfindungsgemäße Kupplungssteuerung wird deren Anwendung auf eine hydraulische Naßkupplung, die im Antriebsstrang eines Kraftfahrzeuges vor einem stufenlosen automatischen Getriebe angeordnet ist, beschrieben. Es ist jedoch auch eine Anwendung für Schaltgetriebe denkbar.

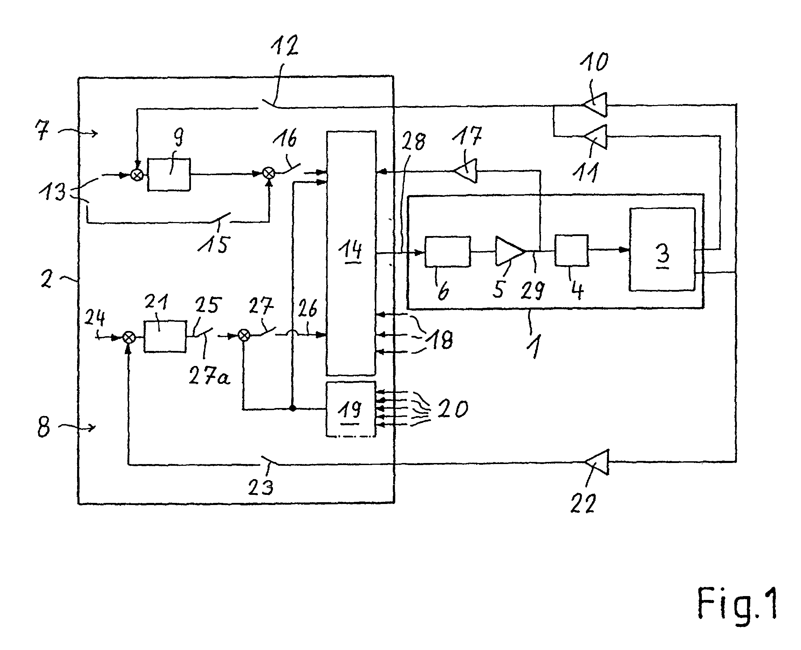

Das in Figur 1 dargestellte Ausführungsbeispiel weist einen Hardware-Teil 1 und einen Software-Teil 2 auf. Zum Hardware-Teil 1 gehören das Getriebe 3, die Kupplung 4, z.B. eine hydraulische Naßkupplung mit Rückstellfeder, ferner ein Steuerventil 5, z.B. ein Proportionalventil, sowie ein variabler Steuermagnet 6. Abhängig von einem an den Steuermagneten 6 angelegten Sollstrom stellt sich ein bestimmter Hydraulikdruck auf die Kupplung 4 ein, wodurch wiederum die Transmission bzw. der Kupplungsschlupf des Getriebes 3 beeinflußt wird. Die Transmission wird aus der Motordrehzahl vor der Kupplung 4 und der Primärdrehzahl bzw. der Getriebeeingangsdrehzahl hinter der Kupplung 4 bestimmt. Die Differenz aus diesen beiden Drehzahlen bestimmt den aktuellen Kupplungsschlupf. Dieser Kupplungsschlupf stellt eine mögliche Istwertgröße für eine Kupplungsregelung dar. Die Schlupfregelung ist der in Figur 1 obere Regelblock 7 des Software-Teils 2. Der untere Regelblock 8 stellt eine Motordrehzahlregelung dar.

Die Schlupfregelung 7 weist einen PID-Regler 9 auf, dem vom Getriebe 3 sowohl die Motordrehzahl 10 als auch die Getriebeeingangsdrehzahl 11 zugeführt wird, wobei diese Zuführung mit einem Schalter 12 unterbrochen werden kann. Aus der Differenz zwischen der Motordrehzahl 10 und der Getriebeeingangsdrehzahl 11 wird der aktuelle Kupplungsschlupf errechnet. Dem PID-Regler 9 wird ebenfalls ein Sollwert 13 für eine Kupplungsschlupfrate oder ein Kupplungsschlupf-Sollwert zugeführt, die auch direkt einem inversen Feed-Forward-Modell 14 der Kupplungssteuerung zugeleitet werden. Auch diese Zuleitungen können durch Schalter 15 und 16 unterbrochen werden.

Zwischen dem Steuerventil 5 und der Kupplung 4 wird der Hydraulikdruck abgefragt, und ein entsprechendes Signal 17 wird ebenfalls zu dem inversen Feed-Forward-Modell 14 geleitet. In das inverse Feed-Forward-Modell 14 können noch weitere Steuergrößen 18 eingehen, die verschiedene Kupplungszustände darstellen.

Der Software-Teil 2 enthält auch eine Echtzeit-Drehmomentberechnung 19, in die eine Reihe von geeigneten Kenngrößen 20 für den Motorbetriebszustand, wie z.B. Zündzeitpunkt und Luft/Kraftstoff-Verhältnis, eingehen. Das Echtzeit-Motordrehmoment wird für die Schlupfregelung 7 ebenfalls dem inversen Feed-Forward-Modell 14 zugeführt.

Die Motordrehzahlregelung 8 weist ebenfalls einen PID-Regler 21 auf. Diesem wird vom Getriebe 3 die Motordrehzahl 22 zugeführt, wobei die entsprechende Leitung durch einen Schalter 23 unterbrochen werden kann. Dem PID-Regler 21 wird auch eine Soll-Motordrehzahl 24 zugeführt. Die Ausgangsgröße des PID-Reglers 8 ist ein Signal für ein Motordrehmoment 25.

Das berechnete Echtzeit-Drehmoment wird auch der Motordrehzahlregelung 8 zugeleitet. Aus dem Echtzeit-Drehmoment und dem vom PID-Regler 21 gelieferten Drehmoment 25 wird ein Solldrehmoment 26 ermittelt, das für die Motordrehzahlregelung 8 dem inversen Feed-Forward-Modell 14 zugeführt wird. Die Leitungen vom PID-Regler 21 und von der Echtzeit-Drehmomentberechnung 19 zum inversen Feed-Forward-Modell können mit zwei Schaltern 27 und 27a unterbrochen werden.

Das inverse Feed-Forward-Modell 14 ermittelt aus den ihm durch die Schlupf- oder die Motordrehzahlregelung 7, 8 zugeleiteten Daten einen Sollstrom 28, den es dem variablen Steuermagneten 6 zuführt. Aufgrund des Sollstroms 28 betätigt der Steuermagnet 6 das Steuerventil 5, um einen vorgegebenen Hydraulikdruck auf die Kupplung 4 zu erzeugen.

Das verwendete inverse Feed-Forward-Modell 14 ist eine Weiterentwicklung der Feed-Forward-Strategie. Bei der Feed-Forward-Strategie wird ein gewisser Anteil der Sollgröße direkt auf die Stellgröße gegeben. Der verbleibende Anteil der Sollgröße läuft jeweils über einen konventionellen Regelkreis. Dieses funktioniert allerdings nur dann zufriedenstellend, wenn die direkt auf den Reglerausgang gegebene Eingangsgröße mit der richtigen Größe und der richtigen Richtung wirkt. Hierzu ist es erforderlich, die Auswirkungen der Istgrößenveränderung auf die Stellgröße möglichst genau im Voraus zu kennen. Hierzu dient das inverse Feed-Forward-Modell 14 der dargestellten Kupplungssteuerung. Das inverse Feed-Forward-Modell 14 rechnet die Kennlinie des Steuermagneten 6, des Steuerventils 5, der Hydraulik 29 und der Kupplung 4 rückwärts, d.h. es simuliert die Übertragungsfunktion der Regelstrecke in inverser Weise. Zusammen mit der Regelstrecke ergibt sich somit eine Übertragungsfunktion von nahezu Eins. Aufgrund von Modellungenauigkeiten, beispielsweise einer unberücksichtigten Kupplungsalterung, ist jedoch eine Rückkopplungsregelung weiterhin in bestimmten Betriebsarten notwendig, jedoch werden nur noch Fehler ausgeregelt, und nicht mehr die gesamte Sollgröße.

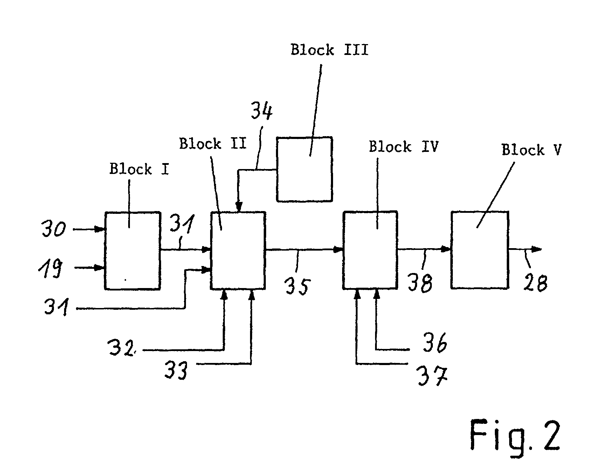

In Figur 2 ist das inverse Feed-Forward-Modell 14 näher dargestellt. Es umfaßt Blöcke I bis V, durch die jeweils verschiedene physikalische Aspekte der Kupplung simuliert werden.

Im Block I wird das von der Kupplung 4 zu übertragende Drehmoment berechnet. Eingangsgrößen sind der Kupplungsschlupf 30 sowie das Echtzeit-Drehmoment 19. Ausgangsgröße ist das Solldrehmoment 31, das an den Block II übergeben wird. Ist der Schlupf von 0 verschieden, so wird in diesem Block auch das Differenz-Trägheitsmoment der rotierenden Komponenten des Kupplungssystems berücksichtigt.

Der Block II enthält das Kupplungsmodell, in den das Solldrehmoment 31 auch unter Umgehung des Blockes I direkt eingegeben werden kann. Weitere Eingangsgrößen sind eine Steuergröße 32 für die Brake-Away-Steuerung, die weiter unten erläutert wird, eine Steuergröße 33 für die Rampe der Drehmomentsteuerung bei geschlossener Kupplung (wird ebenfalls weiter unten näher erläutert) sowie eine Steuergröße 34 für Pumpenverluste. Letztere Steuergröße 34 wird dem Block II vom Block III zugeführt. In Block II wird der benötigte Kupplungsdruck bei einem gewünschten Drehmoment berechnet. Dabei wird die Geometrie der Kupplung sowie der statische und dynamische Reibungskoeffizient der Kupplung mitberücksichtigt.

In Block III werden sog. Pumpenverluste 34 berechnet, die als Ausgangsgröße an Block II übermittelt werden. Durch die Pumpenverluste werden u.a. drehzahl- und temperaturabhängige Schwankungen im Kupplungs-Fluiddurchfluß sowie Schwankungen im Fluidversorgungssystem berücksichtigt, die die für die Erzeugung eines gewünschten Kupplungsdrucks erforderliche Ventilstellung beeinflussen und daher im Feed-Forward-Modell zu berücksichtigen sind.

Block IV enthält ein Steuerventilmodell. Block IV erhält vom Block II als Eingangsgröße den vom Steuerventil einzustellenden Kupplungsdruck 35, d.h. den auf die Kupplung einzustellenden Hydraulikdruck. Weitere Eingangsgrößen sind ein Signal 36 eines optionalen Drucksensors sowie ein Signal 37 für die Open-Loop-Druckrampe bei offener Kupplung (wird weiter unten näher erläutert). In Block IV ist im wesentlichen eine Tabelle oder Funktion implementiert, die die anzusteuernde Stellung des Ventils für einen gewünschten Kupplungsdruck enthält. Dies hängt im wesentlichen von der vemtilgeometrie ab.

Block V enthält das Modell für den variablen Steuermagneten 6 und erhält als Eingangsgröße vom Block IV ein Steuersignal 38 für den einzustellenden Hydraulikdruck. Ausgangsgröße des Blocks V ist der anzulegende erforderliche Sollstrom 28. In diesem Block wird somit die nichtlineare Kennlinie des variablen Steuermagneten kompensiert.

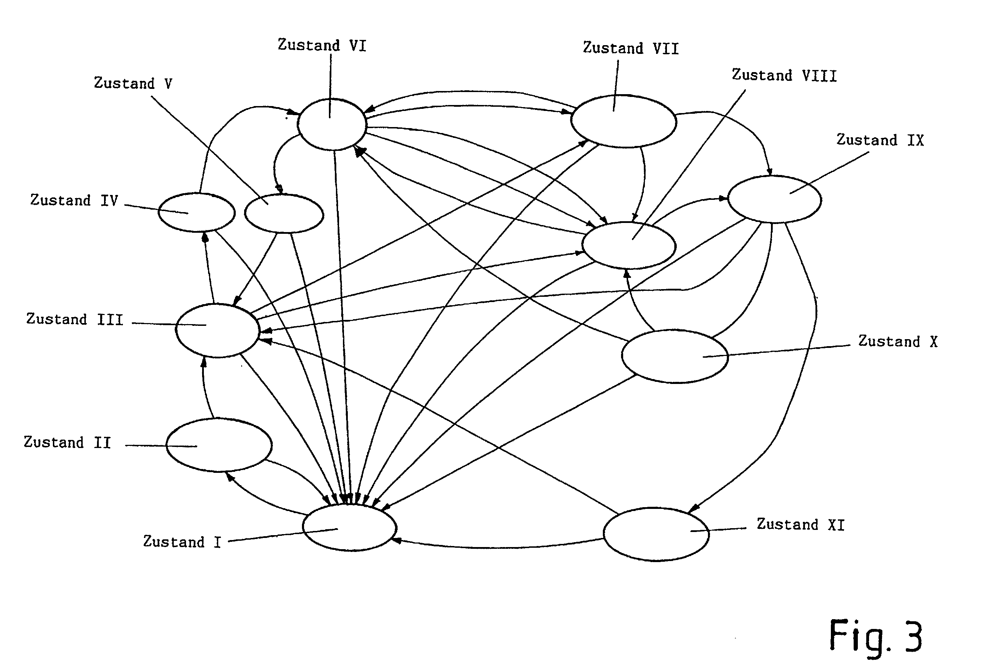

In Figur 3 sind die von der Kupplungssteuerung ansteuerbaren Kupplungszustände dargestellt.

Beim Motorstart befindet sich die Kupplung im Zustand I. Die Kupplung 4 ist offen, der Gangwählhebel steht in P (Parken bzw. Ruhemodus). Nur wenn die Bremse betätigt wird, ist ein Wechsel von P nach D (Fahren) möglich. Dieser Zustand I kann in Notfällen (z.B. Überdrehzahl) von allen anderen Zuständen wieder angefahren werden.

Der Zustand II stellt einen Kriechmodus ohne Drehmomentübertragung (Low Creep) dar, d.h. das Fahrzeug steht. Bei einem Ganghebelwechsel aus P oder auch aus N (Leerlauf) auf D soll der Kriechmodus nicht mit zu großer Verzögerung beginnen. Aufgrund der endlichen Länge der Hydraulikleitung 29 vom Steuerventil 5 zur Kupplung 4 und aufgrund der Entlüftung dieser Hydraulikleitung 29 bei längerer Auskupplungszeit, muß zum Bewirken eines Kupplungsdruckes erst eine Hydraulikölsäule aufgebaut werden, was zu der besagten Verzögerung führt.

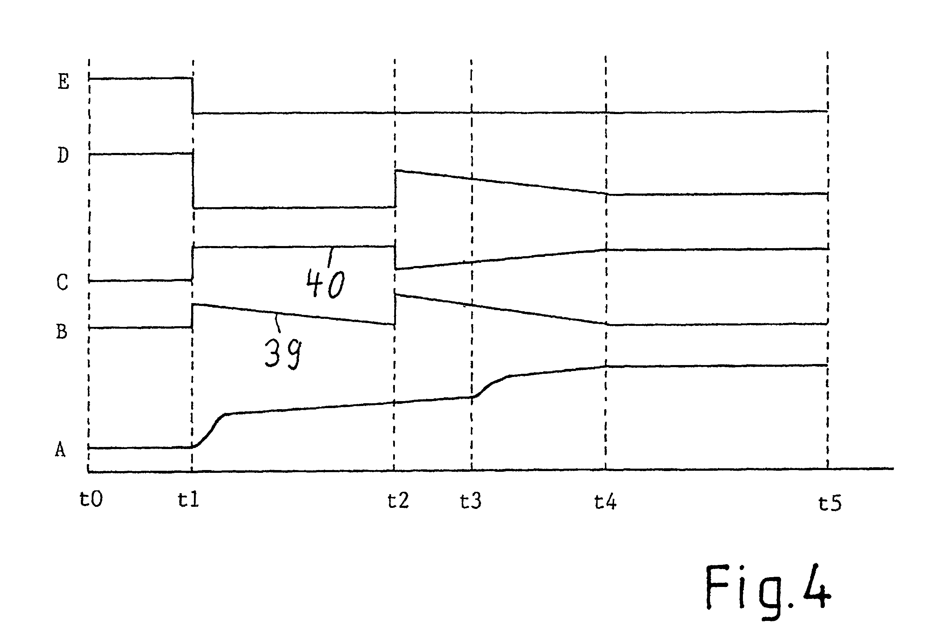

In Figur 4 sind die Verläufe von fünf charakteristischen Größen über die Zeit dargestellt. Zu diesen charakteristischen Größen gehören der Kupplungsdruck A, ein Zeitgeber B, ein rechnerisches Kupplungsdrehmoment C, der an den Steuermagneten D angelegte Sollstrom 0 und die Stellung des Gangwählhebels E.

Zwischen den Zeitpunkten t0 und t1 steht der Gangwählhebel E auf N, der Sollstrom D ist zum Schließen des Steuerventils 5 groß, das rechnerische bzw. Soll-Kupplungsdrehmoment C ist 0, der Zeitgeber B steht auf 0 und der Kupplungdruck A ist ebenfalls auf 0.

Zum Zeitpunkt t1 wird der Gangwählhebel E von N auf D gestellt. zur Reduzierung der Verzögerung infolge des Aufbaus der Hydraulikölsäule wird erfindungsgemäß für eine sogenannte Blip-Time 39 zwischen t1 und t2 ein hohes rechnerisches Kupplungsdrehmoment 40 auf die Kupplungssteuerung gegeben. Dadurch läßt die Kupplungssteuerung den Kupplungsdruck A in einer reinen Open-Loop-Steuerung sehr hoch ansteigen. Das führt zu einer Schnellbefüllung der belüfteten Kanäle. Dies erfolgt rein timergesteuert so lange (im dargestellten Beispiel bis zum Zeitpunkt t2), bis sich nach der Erfahrung ein hinreichender Druck aufgebaut hat, ohne daß die Kupplung 4 einkuppelt, um ein Abwürgen des Motors zu vermeiden. Die Blip-Time 39 bzw. die eingestellte Dauer des Timers ist temperaturabhängig, um die temperaturabhängige Viskosität des Hydrauliköls zu berücksichtigen. Außerdem wird nachgehalten, wie oft das letzte Einkuppeln seit dem Motorstart (oder nach einer längeren Fahrphase) ausgeführt wurde. Daraus kann abgeschätzt werden, wie stark die Hydraulikleitung 29 schon entlüftet ist. Nach längerer Standzeit ist die Hydraulikleitung 29 beispielsweise vollständig entlüftet, wohingegen bei Gangwechseln, z.B. beim Einparken, die Hydraulikleitung 29 noch gefüllt ist. Mit diesen Maßnahmen wird die Verzögerung bei einem Ganghebelwechsel von einem Ruhemodus zu einem Fahrmodus verringert. In diesem Zustand werden die Blöcke II bis V des inversen Feed-Forward-Modells 14 ausgeführt.

Dann wird die Kupplung auf den sogenannten Touch-Point gefahren, in dem gerade noch kein Drehmoment übertragen wird (Zustand III). Dieser Übergang zum Zustand III erfolgt, wenn der Fahrer nach dem Gangwechsel noch die Bremse betätigt. Der Übergang zum Zustand III wird durch eine konstante Rampe erreicht, die open-loop den Kupplungsdruck A auf einen vorgegebenen Kupplungsdruck erhöht (Zeitpunkt t4 in Figur 4). Dabei wird der Sollstrom D kontinuierlich geringer und der Timer B geht zwischen t2 und t4 wieder auf 0 zurück. Der vorgegebene Druck wird abhängig von z.B. der Temperatur angefahren; optional kann auch ein Drucksensor in der Kupplung 4 vorgesehen sein, mit dem der Druck gemessen werden kann, so daß die Rampe bereits vorher abgebrochen werden kann. Ein stärkerer Kupplungsdruck sollte nicht eingestellt werden, da beim Touch-Point die Reibungsverluste geringer als bei einem stärkeren Kupplungsdruck ausgeprägt sind, so daß Energie gespart wird. Der Übergang zum Zustand III erfolgt für den Fahrer möglichst unmerklich. Im Zustand III werden die Blökke II bis V des inversen Feed-Forward-Modells 14 ausgeführt.

Läßt der Fahrer jetzt die Bremse los, soll ein wirkliches Kriechen (high creep, Zustand IV) eingeleitet werden. Dieses Kriechen kann open-loop durchgeführt werden, also mit einem bestimmten Übertragungsfaktor, so daß das Fahrzeug abhängig von Gefälle, Temperatur usw. unterschiedlich schnell kriecht. Bei dieser Möglichkeit wird auf einen vorgegebenen Kupplungsdruck geregelt. Es ist aber auch eine Motordrehzahlregelung 8 closed-loop gemäß Figur 1 möglich, so daß das Fahrzeug immer gleich schnell kriecht. Es ist auch denkbar, daß der Fahrer zwischen geregeltem und ungeregeltem Kriechen wählen kann. Ferner ist auch denkbar, daß der Fahrer das Kriechen über einen Schalter vollständig abstellen kann. Im Zustand IV werden die Blöcke II bis V des inversen Feed-Forward-Modells 14 ausgeführt.

Der umgekehrte Übergang ist Zustand V. Dieser Übergang erfolgt in gegenüber Zustand IV umgekehrter Richtung, jedoch immer im Open-Loop-Modus. In diesem Zustand werden die Blökke II bis V des inversen Feed-Forward-Modells 14 ausgeführt.

Das eigentliche Kriechen erfolgt im Zustand VI. Dieses Kriechen kann wie im Zustand IV entweder open- oder closed-loop mit Motordrehzahlregelung 8 ausgeführt werden, wobei im Zustand IV und VI gleichzeitig entweder Open- oder Closed-Loop-Regelung verwendet werden. Bei Open-Loop-Regelung wird ein bestimmter Kupplungsdruck angefahren. In diesem Zustand VI werden die Blöcke II bis V des inversen Feed-Forward-Modells 14 ausgeführt.

Wird nun das Gaspedal betätigt, wird in den Zuständen VII und VIII die Kupplung 4 sukzessive eingekuppelt. Wenn der Schlupf den Wert "0" erreicht ist, ist der Einkupplungsvorgang abgeschlossen, d.h. es liegt eine vollständige Einkupplung vor.

Sobald ein Schlupf von "0" erreicht ist, wird in den Normalfahrbetriebszustand IX übergegangen, in dem die Kupplung 4 geschlossen bleibt, bis anhand anderweitiger Anforderungen, wie beispielsweise Betätigung des Gaspedals, ein anderer Zustand erreicht werden soll. Im Zustand IX werden die Blöcke II bis V des inversen Feed-Forward-Modells 14 ausgeführt.

Im Zustand IX wird nicht der volle Hydraulikdruck bzw. der volle Kupplungsdruck aufgebracht, um Verluste zu vermeiden.

Vielmehr wird nur der zur Übertragung des aktuellen Drehmomentes zuzüglich eines Sicherheitsfaktors für die sichere Übertragung notwendige Druck mittels Open-Loop-Steuerung aufgebracht. Da die Kupplung 4 hierdurch planmäßig das schwächste Glied in der Antriebskette ist, führen Schläge von der Straße auf den Antriebsstrang zum Durchrutschen der Kupplung 4, was das automatische Getriebe 3 schützt.

Der Zustand X stellt ein Merkmal dar, das den Fahrkomfort in besonderer Weise erhöht. Der Zustand X kann ausgehend ausschließlich von Zustand IX auf zwei Arten aktiviert werden: einmal durch ein sogenanntes "Tip In", d.h. ein abruptes Niederdrücken des Gaspedals bzw. ein plötzliches Loslassen des Gaspedals, was zu schnellen Änderungen der Drosselklappenstellung führt, und zum anderen durch sehr niedrige Fahrzeuggeschwindigkeiten, bei denen bei vollständig geschlossener Kupplung ein Abwürgen des Motors zu befürchten wäre, wie beispielsweise beim Ausrollen des Fahrzeuges. Um Schläge im Antriebsstrang bzw. ein Abwürgen zu vermeiden, wird in diesem Zustand ein künstlicher Kupplungsschlupf erzeugt (sog. Brake-Away-Regelung). Dieser kann durch spezielle Regelmaßnahmen erzeugt werden, durch die die Kupplung 4 ein wenig geöffnet wird. Vorzugsweise wird hierzu in dem inversen Feed-Forward-Modell 14 der Kupplung ein Parameter der Kupplung, nämlich der Reibungswert der Kupplung, geändert. Der Reibungswert wird in Block II hochgesetzt, so daß eine griffigere Kupplung als vorhanden simuliert wird und sich auf diese Weise ein Kupplungsschlupf ergibt. Im Zustand X werden im inversen Feed-Forward-Modell 14 alle Blöcke I bis V aktiviert. Der Reibungswert ist für das leichte Öffnen der Kupplung ausgehend vom Zustand IX eine besonders geeignete Größe, da so ein definierter Kupplungsschlupf mit geringem Aufwand bewirkt werden kann.

Nach Änderung des Reibungswert in Zustand X wird wieder in Zustand VIII übergegangen, in dem eine Regelung in Hinblick auf einen Schlupf-Sollwert "0" durchgeführt wird. Ist dieser Sollwert erreicht, wird der Reibungswert wieder zurückgesetzt und wieder in den Normalfahrbetriebszustand IX übergegangen.

Ausgehend vom Zustand IX kann noch der Zustand XI angefahren werden, der unterhalb einer vorgegebenen Fahrzeuggeschwindigkeit aktiviert wird. Im Zustand XI wird der Kupplungsdruck nicht sofort auf Null gefahren, um die Kupplung zu öffnen, sondern es wird eine definierte Rampe open-loop von einem zunächst höheren festgelegten Druck gefahren, um ein reproduzierbares Gefühl beim Auskuppeln zu erzeugen. Hierfür werden nur die Blöcke IV und V des inversen Feed-Forward-Modells 14 verwendet.

Wenn die Motordrehzahl unter einen unteren Grenzwert absinkt, kann zum Schutz vor einem Abwürgen des Motors von jedem Zustand auf den zustand I übergegangen werden.

## Patentansprüche

1. Verfahren zum automatischen Steuern einer Kupplung, die ein Drehmoment von einem Motor auf ein Getriebe überträgt, wobei
ein Kupplungsschlupf aus der Differenz zwischen der Motordrehzahl (10) und der Getriebeeingangsdrehzahl (11) bestimmt wird,
das Drehmoment von der Kupplung (4) während des Normalfahrbetriebes schlupffrei übertragen wird und
bei plötzlichen Laständerungen unverzüglich ein künstlicher Kupplungsschlupf erzeugt und dieser anschließend allmählich wieder auf Null verringert wird, **dadurch gekennzeichnet, dass**
die Kupplung ausschließlich von einem inversen Feed-Forward-Modell (14) gesteuert wird, das den mittels eines Stellgliedes auf die Kupplung aufzubringenden Kupplungsdruck in Abhängigkeit von einem gewünschten Kupplungsschlupf bestimmt.

2. Verfahren nach Anspruch 1, **dadurch gekennzeichnet, daß** die plötzlichen Laständerungen aufgrund einer schnellen Änderung der Stellung eines Leistungssteuerelements des Motors erkannt werden.

3. Verfahren nach Anspruch 1 oder 2, **dadurch gekennzeichnet, daß** zusätzlich bei sehr niedrigen Motordrehzahlen ein künstlicher Kupplungsschlupf erzeugt wird.

4. Verfahren nach einem der Ansprüche 1 bis 3, **dadurch gekennzeichnet, daß** der Kupplungsdruck über das inverse Feed-Forward-Modell während des schlupffreien Normalfahrbetriebes auf einen Druck eingestellt wird, der bei dem Minimaldruck für Schlupffreiheit zuzüglich eines Sicherheitsfaktors liegt.

5. Verfahren nach einem der Ansprüche 1 bis 4, **dadurch gekennzeichnet, daß** in das inverse Feed-Forward-Modell (14) der Reibungswert der Kupplung (4) eingeht, und daß der künstliche Kupplungsschlupf durch Erhöhen des Reibungswertes erzeugt wird.

6. Verfahren nach einem der Ansprüche 1 bis 5, **dadurch gekennzeichnet, daß** nach Erzeugung des künstlichen Kupplungsschlupfes über das inverse Feed-Forward-Modell eine Rückkopplungsregelung mit dem Schlupfsollwert "0" durchgeführt wird, bis die Schlupffreiheit erreicht ist.

## Claims

1. Method of automatically controlling a clutch which transfers a torque from an engine to a transmission wherein
a clutch slip is determined from the difference between the engine speed (10) and the transmission input speed (11),
the torque from the clutch (4) is transferred slip-free during the normal driving operation and
with sudden load changes without delay an artificial clutch slip is produced and this is subsequently gradually reduced to nil, **characterised in that**
the clutch is exclusively controlled by an inverse feed forward model (14) which determines the clutch pressure to be applied to the clutch by means of an adjustment member depending upon a desired clutch slip.

2. Method according to claim 1 **characterised in that** the sudden load changes are recognised due to a quick change of the position of a performance control element of the engine.

3. Method according to claim 1 or 2 **characterised in that** additionally with very low engine speeds an artificial clutch slip is produced.

4. Method according to one of the claims 1 to 3 **characterised in that** the clutch pressure is set via the inverse feed forward model during the slip-free normal driving operation to a pressure which lies at the minimum pressure for slip freedom plus a safety factor.

5. Method according to one of the claims 1 to 4 **characterised in that** the friction value of the clutch (4) goes into the inverse feed forward model and that the artificial clutch slip is produced through increasing the friction value.

6. Method according to one of the claims 1 to 5 **characterised in that** after production of the artificial clutch slip via the inverse feed forward model a feedback regulation with the slip reference value "0" is carried out until slip freedom is achieved.

## Revendications

1. Procédé de commande automatique d'un embrayage répercutant, sur une transmission, un couple de rotation développé par un moteur, dans lequel
un patinage d'accouplement est déterminé à partir de la différence entre la vitesse angulaire (10) du moteur et la vitesse angulaire d'entrée (11) de la transmission,
le couple de rotation est répercuté sans patinage, par l'embrayage (4), en mode déplacement normal, et
un patinage d'accouplement artificiel est immédiatement engendré lors de variations brusques de la charge, puis est ensuite progressivement ramené vers zéro, **caractérisé par le fait que**
l'embrayage est exclusivement piloté par un modèle inverse "feed-forward" (14) qui détermine, en fonction d'un patinage d'accouplement souhaité, la pression d'accouplement devant être exercée sur ledit embrayage au moyen d'un organe de réglage.

2. Procédé selon la revendication 1, **caractérisé par le fait que** les variations brusques de la charge sont repérées sur la base d'une modification rapide de la position d'un élément de commande de puissance du moteur.

3. Procédé selon 1a revendication 1 ou 2, **caractérisé par le fait qu'**un patinage d'accouplement artificiel est additionnellement engendré à de très faibles vitesses angulaires du moteur.

4. Procédé selon l'une des revendications 1 à 3, **caractérisé par le fait que** la pression d'accouplement est réglée en mode déplacement normal exempt de patinage, par l'intermédiaire du modèle inverse "feed-forward", sur une pression avoisinant la pression minimale pour l'absence de patinage, à laquelle s'ajoute un facteur de sûreté.

5. Procédé selon l'une des revendications 1 à 4, **caractérisé par le fait que** la valeur de la friction de l'embrayage (4) est entrée dans le modèle inverse "feed-forward" (14); et **par le fait que** le patinage d'accouplement artificiel est engendré par accroissement de ladite valeur de friction.

6. Procédé selon l'une des revendications 1 à 5, **caractérisé par le fait que**, après génération du patinage d'accouplement artificiel, une régulation de rétrocouplage est exécutée par l'intermédiaire du modèle inverse "feed-forward", avec la valeur de consigne "0" du patinage, jusqu'à ce que l'absence de patinage soit atteinte.
